# EUROPEAN PATENT APPLICATION

(11) **EP 2 687 405 A2**
(43) Date of publication of application: **22.01.2014**
(21) Application number: 13186670.9
(22) Date of filing: 01.12.2006
(51) Int. Cl.: B60P 7/08

(54) **A cargo securing device for securing cargo**

(30) Priority: 29.09.2006 NO 20064434
(62) Divisional of application: 06824358.3
(71) Applicant: Jeiko Innovations Oy, 00990 Helsinki (FI)
(72) Inventor: Jensen, Espen, 4614 Kristiansand S. (NO)
(74) Representative: Håmsø Patentbyrå ANS

(57) **Abstract**

A cargo securing device (2, 2') comprising:
- a flexible and lengthy attachment means having a first and a second end portion;
- a peripherally rotatable storage spool (6) onto which the first end portion of the attachment means is fastened and is spoolable upon;
- a lockable and releasable tightening device connected to the attachment means for the tightening thereof; and
- a common support structure (10, 10') for supporting said storage spool (6) and tightening device, wherein the support structure (10, 10') is provided with at least one fastening device to be fixed to an external anchor object. The storage spool (6) and the tightening device are arranged separate from one another;
- wherein the tightening device is adapted for free passage of the attachment means via the tightening device; and
- wherein the second and free end portion of the attachment means is conducted from the storage spool (6) via the tightening device.

## Description

### Area of the invention

The present invention concerns a cargo securing device for securing, for example, cargo to be transported by a means of transport, e.g. car, lorry, train, boat or airplane. Preferably, but not necessarily, the cargo securing device is structured as a portable device.

### Background of the invention

The origin of the invention is the many disadvantages that the prior art in this area is encumbered with. Prior art cargo securing devices and cargo securing methods oftentimes are cumbersome and/or take much time to use. The cargo securing devices may be big, extensive and oftentimes are difficult and/or slow to handle. Small and simple cargo securing devices, however, may be fast to handle, but they oftentimes prove rather inflexible in use. Thus, the prior art in the area oftentimes is inferior in terms of user-friendliness.

For the purpose of securing cargo, long straps or similar oftentimes are used and are fastened in a tightening manner against, and possibly around, the cargo to be secured. In their positions of rest, such long attachment straps oftentimes are left lying around, or are suspended, on the means of transport. Thereby, the attachment straps and potential other equipment get in the way of personnel and various other equipment used in this connection, which may lead to accidents and casualties and hence represents a safety risk. Moreover, such unprotected cargo securing equipment oftentimes become soiled with various particles, dirt, liquids, ice, snow, etc., which is undesirable and possibly may represent a further safety risk.

### Prior art and the disadvantages thereof

As examples of prior art in the present technical area, the following patent publications are referred to:
- US 2.449.600;
- US 4.842.458;
- US 5.282.706; and
- US 6.059.499.

These publications relate to cargo securing devices for attaching and securing cargo on a means of transport. All of these cargo securing devices comprise a storage spool onto which an end portion of a rope, belt, wire or similar is spooled and may be fed out from. The cargo securing devices also comprise a tightening device for tightening and keeping said rope, belt, wire or similar fastened in a tightening manner against, and possibly around, the cargo in question. In US 2.449.600, US 5.282.706 and US 6.059.499, the tightening device consists of a lockable and releasable ratchet mechanism comprising a ratchet wheel having peripheral catch levers and a cooperating, movable pawl for engagement with the catch levers.

In US 4.842.458, however, the tightening device consists of a resilient device comprising a biased coil spring for keeping a rope or belt taut whilst being fed out and also during the securing of cargo, and for performing self-rewinding of the rope or the belt after use.

Common to all of these cargo securing devices is that the storage spool is attached around a rotary shaft, which also is connected to the tightening device. Thereby, the storage spool, the rotary shaft, and the tightening device are in direct connection with one another so as to form a joint operative unit. Thus, and contrary to the present cargo securing device, the components of the operative unit are not arranged separate from one another. This involves, among other things, the disadvantage that the unit may become relatively big and bulky, especially if said rope, belt or similar is dimensioned for heavy duty use, and/or is of a large length.

The last-mentioned circumstance may also cause said spool to be used only as a tightening spool, in which only a relatively short length of said rope/belt is spooled onto the spool for the tightening thereof, generally by means of a ratchet mechanism of the abovementioned type. The remaining length of the rope/belt, however, will be left lying around, or will be suspended, outside the operative unit, thus involving the abovementioned safety risk and possibility of becoming soiled.

Other problems associated with prior art cargo securing devices involves the fact that said rope/belt/etc. easily becomes jammed during its feed-out or feed-in. Furthermore, an inaccurate locking of the rope/belt/etc. within these devices oftentimes is achieved.

### The object of the invention

The object of the invention is to remedy or avoid disadvantages of the prior art in the present area.

### How the object is achieved

The object is achieved in accordance with the features disclosed in the following description and in subsequent claims.

According to the invention, a cargo securing device for securing cargo is provided, the device comprising the following constructive features:
- a flexible and lengthy attachment means having a first and a second end portion;
- a peripherally rotatable storage spool onto which the first end portion of the attachment means is fastened and is spoolable upon;
- a lockable and releasable tightening device connected to the attachment means for the tightening thereof; and
- a common support structure for supporting said storage spool and tightening device, wherein the support structure is provided with at least one fastening device to be fixed to an external anchor object. The distinctive characteristic of the present cargo securing device is that the storage spool and the tightening device are arranged separate from one another;
   - wherein the tightening device is adapted for free passage of the attachment means via the tightening device; and
   - wherein the second and free end portion of the attachment means is conducted from the storage spool via the tightening device.

Although not necessarily be required, said flexible attachment means may be comprised of one of the following types of attachment means:
- a strap;
- a rope;
- a belt;
- a wire;
- a line; and
- a chain.

For example, said support structure may comprise a frame, a profile or a housing within which, or onto which, the storage spool, the tightening device and the attachment means are arranged. Thus, the support structure may be structured as a dispenser device for feed-out and roll-up of the attachment means. Advantageously, the support structure may also comprise various guide pulleys, guide vanes or similar for suitable guidance of said feed-out and roll-up.

If the attachment means comprises one or several relatively smooth materials, the surface of the attachment means advantageously may be of a friction-promoting arrangement. Thereby, the attachment means may have, for example, a rough surface or be provided with a pattern, protrusion or similar that promotes friction upon pressure against the surface. This will counteract any slackening slippage of the attachment means when kept taut in its operational cargo securing position.

Advantageously, the second and free end portion of the attachment means may be provided with a fastening device, for example a hook, catch or similar adapted for engagement with, for example, an external attachment lug on the means of transport. However, the attachment means does not necessarily have to be provided with such a fastening device and may be fixed in other ways, for example by fixing the free end portion of the attachment means to a suitable external anchor object.

Yet further, said storage spool may be adapted for self-rewinding of the attachment means after being fed out. Thus, the storage spool may be adapted for self-rewinding by means of at least one biased coil spring arranged between the storage spool and the support structure.

Alternatively, the storage spool may be connected to a manually operated or engine-driven crank, handle or similar for peripheral rotation of the spool and associated roll-up of the attachment means.

The storage spool may also be of a replaceable arrangement. Thereby, a worn, soiled and/or damaged attachment means on the spool may be replaced with another spool having a new such attachment means spooled thereon. Thus, the storage spool may also be replaced with another spool having another type and/or length of the attachment means spooled thereon. In this connection, the storage spool may, for example, be connected to a rotary shaft releasably supported in the support structure and hence being easily removable therefrom.

In a preferred embodiment of the cargo securing device, the tightening device is comprised of a lockable and releasable tightening spool supported in a peripherally rotatable manner in the support structure; - wherein the tightening spool is provided with a transverse through-opening through which the attachment means is conducted. Peripheral rotation of the tightening spool in the tightening direction thereof will thus spool the attachment means onto the tightening spool, thereby shortening and tightening the attachment means for the locking thereof in its taut and operational cargo securing position.

In order to allow said tightening spool to be locked and released, and also for ratchet wheel adjustment, the cargo securing device advantageously may be provided with a lockable and releasable ratchet mechanism arranged between the tightening spool and the support structure for peripheral rotation of the tightening spool, said ratchet mechanism including:
- at least one ratchet wheel having peripheral catch levers; and
- at least one movable locking pawl adapted for locking engagement with said catch levers, insofar as movement of the locking pawl will bring it into, or out of, engagement with said catch levers;
- wherein the ratchet wheel is connected in a peripherally co-rotatable manner to the tightening spool; and
- wherein the movable locking pawl is fixedly connected to the support structure.

In one embodiment in which the cargo securing device is provided with such a ratchet mechanism, the ratchet mechanism may also include an arm extending out from the ratchet wheel and being rotatable around the ratchet wheel for supplying a torque thereto;
- wherein the arm also is provided with at least one lockable, releasable and movable tightening pawl adapted for engagement with said catch levers during the tightening rotation of the ratchet wheel, insofar as movement of the tightening pawl will bring it into, or out of, engagement with said catch levers. Such an arm may have the form of a handle, bow, crank or similar.

In a second embodiment in which the cargo securing device is provided with such a ratchet mechanism, said tightening spool may be connected in a peripherally co-rotatable manner to at least one toothed pinion for supplying a torque to the ratchet wheel;
- wherein the toothed pinion is connected, via a gear ratio, to a toothed drive wheel;
- wherein the toothed drive wheel is connected to the support structure; and
- wherein the toothed drive wheel is connected to a driving device for peripheral rotation thereof.

In one variant, this driving device may comprise a peripherally rotatable auxiliary spool onto which a flexible and lengthy tightening means is spooled for pull-out and peripheral rotation of the toothed drive wheel. For example, the tightening means may consist of a cord, rope or similar, which preferably is pulled out manually in order to supply said tightening torque to the ratchet wheel. Preferably, said auxiliary spool is adapted for self-rewinding of the tightening means after being fed out.

In another variant, the driving device is comprised of an electric motor, and preferably a battery-powered electric motor.

The tightening means of the cargo securing device may also be comprised of other types of lockable and releasable tightening devices not based on the use of a tightening spool to tighten the flexible and lengthy attachment means. In order to allow the tightening device to be locked and released, this device may thus comprise a lockable and releasable clamping device, pressing device, choking device, constriction device or similar adapted for free passage of the attachment means via the device, and which will keep the attachment means clamped in the cargo securing device when in its operational position. This, for example, may be carried out by having the attachment means conducted through, or up against, such a device, which for example may consist of a spring-loaded clamp, wedge, pawl or similar. In order to allow the attachment means to be tightened by means of such a tightening device, it must also comprise a suitable tightening means. This tightening means may be fixed in said clamping device or similar, and it may also be arranged movable relative to the support structure of the cargo securing device. By using the tightening means to move the clamping device in a suitable direction when being clamped against the lengthy attachment means, the attachment means may be shortened and thus be tightened. For example, the tightening means may consist of a hydraulically or mechanically activated cylinder, pawl or similar, which upon activation provides a tightening movement of the attachment means.

Preferably, the support structure of the cargo securing device is also provided with at least one cleaning device for said attachment means. As such, the cleaning device may be placed in at least one of the following positions:
- between the storage spool and the tightening device;
- within the tightening device; and
- between the tightening device and the second and free end portion of the attachment means.

For example, said cleaning device may be comprised of at least one of the following types of cleaning devices:
- a brush device;
- a scraping device;
- a dirt-attractive material; and
- a cleansing agent for dirt removal.

Moreover, said fastening device for fixing the support structure of the cargo securing device to an external anchor object, may be comprised of at least one further flexible and lengthy attachment means chosen from one of the following types of attachment means:
- a strap;
- a rope;
- a line; and
- a chain.

This fastening device may also be comprised of at least one further cargo securing device of the present type, which is interconnected with a first cargo securing device of this type, but which has a feed-out direction being different from the feed-out direction of the first cargo securing device. Thereby, two or several such cargo securing devices may be arranged in an assembly thereof, for example in a double cargo securing device, or in a multi cargo securing device shaped as a spider-resembling cargo securing cross or similar construction, which is capable of feeding e.g. straps in and out in several directions.

As an alternative, said fastening device may be comprised of one or several anchor bolts, screws, threaded connections, quick couplings, swivel joints, swivel rings, swivel bolts, etc. Such a fastening solution may prove suitable in connection with transport means which, according to desire, are provided with fixed cargo securing devices of the present type, for example on a platform body or wall of a lorry, goods wagon, container, airplane, etc.

However, the present cargo securing device advantageously may be structured as a portable device. Preferably, such a portable cargo securing device is of a size and weight easily handled manually. The device should also be provided with a clamp, hook, clip or similar for allowing the device to be suspended when not in use, for example in the belt of a person or on an associated wall or equipment.

### Short description of the figures

In the following, two embodiment examples of the present cargo securing device will be shown, in which:
Figure 1a shows a base view of one embodiment of the cargo securing device during feed-out of a strap;
Figure 1b shows a front elevation of the cargo securing device according to figure 1a;
Figure 1c shows a front elevation of the cargo securing device according to figure 1a and 1b, but after having said strap fed out and tightened around a cargo item (not shown);
   and
Figure 2 shows a front elevation of a second embodiment of the cargo securing device, in which the figure shows a longitudinal section through the cargo securing device whilst its strap is tightened around a cargo item (not shown).

The figures are schematic and may be somewhat distorted with respect to relative sizes and placement of components relative to one another. In the following, similar or corresponding details in the figures generally will be given the same or similar reference numerals.

### Embodiment examples of the invention

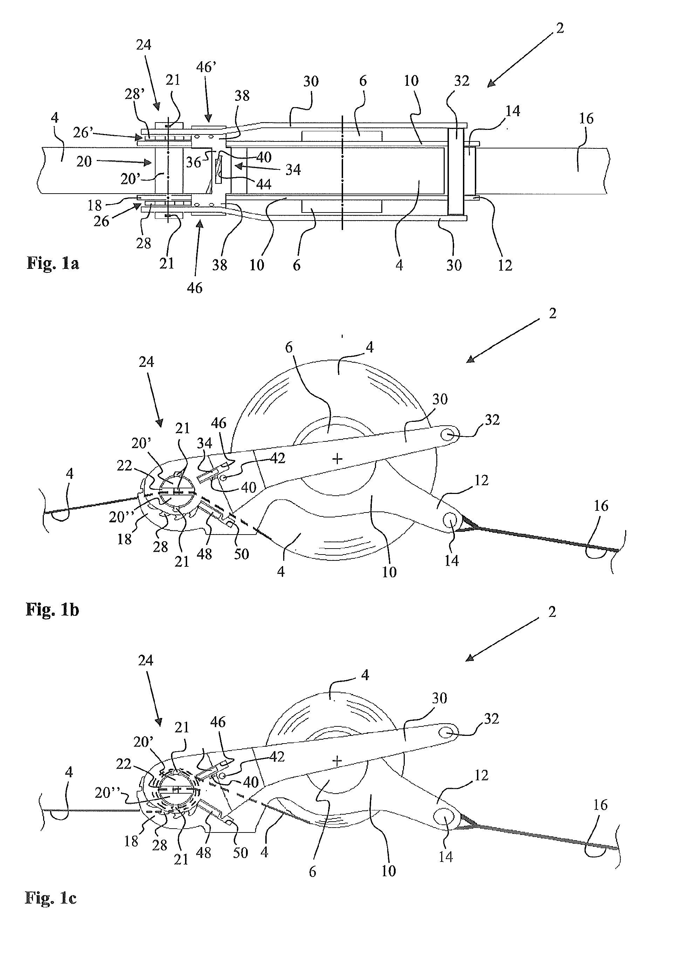

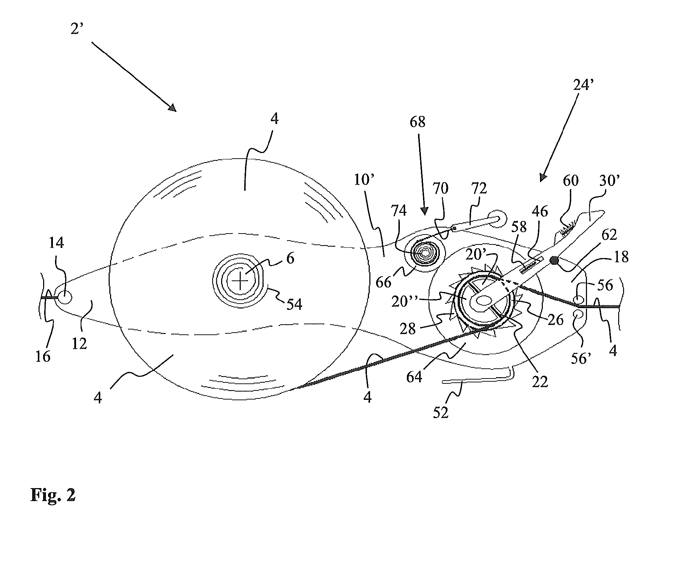

Figure 1a-1c and figure 2 show two different embodiment variants of the present cargo securing device.

Figure 1a-1c show one embodiment variant of a cargo securing device 2 for securing cargo. The cargo securing device 2, which in this case is a portable device, comprises the following components:
- a flexible and lengthy strap 4 having a first and a second end portion (not shown);
- a peripherally rotatable storage spool 6 onto which the first end portion of the strap 4 is fastened and is spoolable upon;
- a lockable and releasable tightening device connected to the strap 4 for the tightening thereof; and
- a common, lengthy frame 10 for supporting the storage spool 6 and the tightening device.

The storage spool 6 may be adapted for self-rewinding, for example by means of a biased coil spring (which is explained further in connection with figure 2). Alternatively, the storage spool 6 may be connected to a manually operated or engine-driven crank, handle or similar for peripheral rotation of the spool. This, however, is not shown in figure 1a-1c.

At a first end 12, the frame 10 is provided with a transverse bolt 14 onto which a further strap 16 is fastened to allow the cargo securing device 2 to be fixed to an external anchor object (not shown), for example to an attachment lug on a platform body or similar. Said tightening device is arranged at a second and opposite end 18 of the frame 10. For example, said second and free end portion of the strap 4 may be provided with a hook, catch or similar adapted for engagement with said attachment lug.

The distinctive characteristic of the cargo securing device 2 is that the storage spool 6 and the tightening device are arranged separate from one another. Furthermore, the second and free end portion of the strap 4 is conducted from the storage spool 6 via the tightening device, which is adapted for free passage of said spoolable strap 4 via the tightening device.

According to this first embodiment variant of the cargo securing device 2, the tightening device is comprised of, among other things, a lockable and releasable tightening spool 20 supported in a peripherally rotatable manner in the frame 10 and extending somewhat outside of it. In general, the tightening spool 20 includes a transverse shaft formed from two shaft elements 20' and 20". The shaft elements 20' and 20" are arranged in parallel but at a diametric distance relative to one another. They are kept together in this configuration by means of a cotter pin 21 inserted through each of their outwardly extending end portions. The centre line of the shaft is shown with a dash-dot line in figure 1a, and such a dash-dot line is also shown for a corresponding shaft (not shown) for the storage spool 6.

Due to the shaft elements 20' and 20" being arranged at a diametric distance from one another, they form a through-opening 22 through which the strap 4 is conducted, as best shown in figure 1b. Figure 1b also shows the present cargo securing device 2 whilst in its feeding position, in which the strap 4 may be spooled off or onto the tightening spool 20 for feeding the strap 4 out or in, respectively. In the feeding position, the tightening spool 20 is rotated in a manner allowing the strap 4 to run freely through said through-opening 22 in the tightening spool 20, and preferably parallel, or near parallel, to the opening 22.

Peripheral rotation of the tightening spool 20 in its tightening direction will thus spool the strap 4 onto the tightening spool 20, thereby shortening and tightening it for the locking thereof in a taut position, as shown in figure 1c, which also indicates the tightening direction with peripheral arrows around the tightening spool 20. During the tightening, the strap 4 will be spooled onto the tightening spool 20 from both sides of its through-opening 22, and as a sandwich formation of overlapping strap windings in response to one or more revolutions of the spool 20.

In order for the tightening device to be lockable and releasable, and also for ratchet wheel adjustment, a lockable and releasable ratchet mechanism 24 is arranged between the tightening spool 20 and the frame 10 for peripheral rotation of the tightening spool 20. The ratchet mechanism 24 includes, among other things, two ratchet wheels 26, 26' provided each with its own catch levers 28 and 28', each of wheels 26, 26' being arranged at its own axial end of the tightening spool 20. The ratchet wheels 26, 26' are connected in a peripherally co-rotatable manner to the tightening spool 20.

In order to allow a torque to be supplied to the ratchet wheels 26, 26' whilst spooling and tightening the strap 4 around the tightening spool 20, the ratchet mechanism 24 also includes an U-shaped arm 30 with a transverse hand grip 32 extending out from, and being rotatable around, the tightening spool 20 and the ratchet wheels 26, 26'. The arm 30 is also provided with a lockable, releasable and movable tightening pawl 34 fixedly, although movably, connected to the arm 30. In this embodiment example, the tightening pawl 34 is in the form of a U-shaped plate 36 which, due to its shape, includes two plate elements 38, 38' adapted for locking engagement with said catch levers 28, 28' on the ratchet wheels 26, 26'. The plate 36 is biased against the ratchet wheels 26, 26' by means of a spring 40, one end of which is attached to the arm 30 at a point 42, and the other end of which is placed in a transverse slit 44 in the plate 36. Insofar as its plate elements 38, 38' are arranged movable each within its own radially extending slit 46 and 46' in the arm 30, and one slit along each long side thereof, the tightening pawl 34 is arranged radially movable relative to the catch levers 28, 28'. Thereby, the tightening pawl 34 may be moved back and forth within the slits 46, 46' so as to bring the tightening pawl 34 into, or out of, engagement with the catch levers 28, 28', thereby locking or releasing the ratchet mechanism 24. When the tightening pawl 34 is in engagement with the catch levers 28, 28', the arm 30 may be turned with reciprocating motion so as to supply a strap-tightening torque to the ratchet wheels 26, 26' and the tightening spool 20. The ratchet mechanism 24 is released by pushing the tightening pawl 34 out of engagement with the catch levers 28, 28'.

In order to prevent slackening of the tightening spool 20 when being rotated for the spooling and tightening of the strap 4, the ratchet mechanism 24 also includes a movable and spring-loaded locking pawl 48, which is identical to the tightening pawl 34 with respect to its form and function. The locking pawl 48 is adapted for engagement with said catch levers 28, 28' during the tightening rotation of the tightening spool 20. Moreover, the locking pawl 48 is fixedly, although movably, connected to the frame 10 via radially extending slits 50 in the frame 10, and one slit in each long side thereof.

This ratchet mechanism 24 constitutes a well-known ratchet construction.

Figure 2 shows a second embodiment variant of a cargo securing device 2' for securing cargo. The figure shows a longitudinal section through the device 2', in which a front portion has been removed to facilitate the illustration of essential components within the device 2'.

As in the preceding embodiment example, the cargo securing device 2' is lengthy and comprises:
- a modified frame 10' having a first and a second end 12, 18;
- a storage spool 6 onto which a strap 4 is spooled;
- a tightening device comprising a tightening spool 20 with a through-opening 22 and also a modified ratchet mechanism 24' for tightening the strap 4 around the tightening spool 20; and
- a further strap 16 fastened to a transverse bolt 14 at the end 12 of the frame for the fixing thereof to an external anchor object (not shown).

Also this cargo securing device 2' is structured as a portable device comprising, among other things, a hook 52 for allowing the device 2' to be suspended when not in use, for example in the belt of a person or on an associated wall or equipment. Moreover, the storage spool 6 is of a replaceable arrangement owing to the fact that the frame 10' consists of two frame halves (not shown) capable of being joined and separated. Thereby, the storage spool 6 may potentially be replaced with another spool having another length/type of strap spooled thereon.

In this second embodiment variant, the storage spool 6 is also adapted for self-rewinding by means of a biased coil spring 54 arranged between the storage spool 6 and the frame 10', which is shown schematically in figure 2. The coil spring 54 is biased in the roll-up direction of the storage spool 6 and the strap 4. Thereby, the spring 54 will be tightened gradually whilst feeding out the strap 4. When being fed out from the tightening device of the device, the strap 4 is also conducted between two transverse guide pulleys 56, 56'.

This modified ratchet mechanism 24' includes, among other things, ratchet wheels 26, 26' and catch levers 28, 28', as described above, and also a modified, U-shaped arm 30'. The modified arm 30' is provided with radially extending slits 46 and 46' within which a locking pawl 58 (contrary to said tightening pawl 34) may be moved back and forth. The locking pawl 58 is spring-loaded by means of a spring device 60 known per se, which is biased against the locking pawl 58 and the ratchet wheels 26, 26'. Contrary to the preceding arm 30, which was rotatable around the tightening spool 20, the present arm 30' is fixed to the frame 10' in at least one fixing point 62. The modified arm 30' is therefore not rotatable around the tightening spool 20 and is only intended to prevent slackening of the strap 4 whilst being spooled up and tightened onto the tightening spool 20.

In this second embodiment example, the ratchet wheels 26, 26', and thus the tightening spool 20, are supplied a strap-tightening torque by means of a toothed pinion 64, which is connected in a peripherally co-rotatable manner to the tightening spool 20. Yet further, the toothed pinion 64 is connected, via a suitable gear ratio, to a toothed drive wheel 66 (not shown in detail). The toothed drive wheel 66 is connected to the frame 10', and it is also connected to a driving device for peripheral rotation of the toothed drive wheel 66.

This driving device comprises a peripherally rotatable auxiliary spool 68, which is also connected to the frame 10'. A string 70, which is connected to a hand grip 72, is spooled onto the auxiliary spool 68 for pull-out and peripheral rotation of the toothed drive wheel 66. By means of a coil spring 74 connected to the auxiliary spool 68 and being biased in the roll-up direction of the auxiliary spool 68 and the string 70, the auxiliary spool 68 is also adapted for self-rewinding of the string 70 after being fed out.

## Claims

1. A cargo securing device (2, 2') for securing cargo, the device (2, 2') comprising:
- a flexible and lengthy attachment means having a first and a second end portion;
- a peripherally rotatable storage spool (6) onto which the first end portion of the attachment means is fastened and is spoolable upon;
- a lockable and releasable tightening device connected to the attachment means for the tightening thereof; and
- a common support structure (10, 10') for supporting said storage spool (6) and tightening device, wherein the support structure (10, 10') is provided with at least one fastening device to be fixed to an external anchor object, **characterized in that** the storage spool (6) and the tightening device are arranged separate from one another;
- wherein the tightening device is adapted for free passage of the attachment means via the tightening device; and
- wherein the second and free end portion of the attachment means is conducted from the storage spool (6) via the tightening device.

2. The cargo securing device (2, 2') according to claim 1, **characterized in that** the flexible attachment means is comprised of one of the following types of attachment means:
- a strap (4);
- a rope;
- a belt;
- a wire;
- a line; and
- a chain.

3. The cargo securing device (2, 2') according to claim 1 or 2, **characterized in that** the surface of the attachment means is of a friction-promoting arrangement.

4. The cargo securing device (2, 2') according to claim 1, 2 or 3, **characterized in that** the second end portion of the attachment means is provided with a fastening device.

5. The cargo securing device (2, 2') according to any one of claims 1-4, **characterized in that** the storage spool (6) is adapted for self-rewinding of the attachment means after being fed out.

6. The cargo securing device (2, 2') according to claim 5, **characterized in that** the storage spool (6) is adapted for self-rewinding by means of at least one biased coil spring (54) arranged between the storage spool (6) and the support structure (10, 10').

7. The cargo securing device (2, 2') according to any one of claims 1-6, **characterized in that** the storage spool (6) is of a replaceable arrangement.

8. The cargo securing device (2, 2') according to any one of claims 1-7, **characterized in that** the tightening device is comprised of a lockable and releasable tightening spool (20) supported in a peripherally rotatable manner in the support structure (10, 10'); and
- wherein the tightening spool (20) is provided with a transverse through-opening (22) through which the attachment means is conducted;
whereby peripheral rotation of the tightening spool (20) in the tightening direction thereof will spool the attachment means onto the tightening spool (20), thereby shortening and tightening it for the locking thereof in a taut position.

9. The cargo securing device (2, 2') according to claim 8, **characterized in that** a lockable and releasable ratchet mechanism (24, 24') is arranged between the tightening spool (20) and the support structure (10, 10') for peripheral rotation of the tightening spool (20), and also for ratchet wheel adjustment, said ratchet mechanism (24, 24') including:
- at least one ratchet wheel (26, 26') having peripheral catch levers (28, 28'); and
- at least one movable locking pawl (48, 58) adapted for locking engagement with said catch levers (28, 28'), insofar as movement of the locking pawl (48, 58) will bring it into, or out of, engagement with said catch levers (28, 28');
- wherein the ratchet wheel (26, 26') is connected in a peripherally co-rotatable manner to the tightening spool (20); and
- wherein the movable locking pawl (48, 58) is fixedly connected to the support structure (10, 10').

10. The cargo securing device (2, 2') according to claim 9, **characterized in that** the ratchet mechanism (24, 24') also includes an arm (30) extending out from the ratchet wheel (26, 26') and being rotatable around the ratchet wheel (26, 26') for supplying a torque thereto; and
- wherein the arm (30) also is provided with at least one lockable, releasable and movable tightening pawl (34) adapted for engagement with said catch levers (28, 28') during the tightening rotation of the ratchet wheel (26, 26'), insofar as movement of the tightening pawl (34) will bring it into, or out of, engagement with said catch levers (28, 28').

11. The cargo securing device (2, 2') according to claim 9, **characterized in that** the tightening spool (20) is connected in a peripherally co-rotatable manner to at least one toothed pinion (64) for supplying a torque to the ratchet wheel (26, 26');
- wherein the toothed pinion (64) is connected, via a gear ratio, to a toothed drive wheel (66);
- wherein the toothed drive wheel (66) is connected to the support structure (10, 10'); and
- wherein the toothed drive wheel (66) is connected to a driving device for peripheral rotation thereof.

12. The cargo securing device (2, 2') according to claim 11, **characterized in that** the driving device comprises a peripherally rotatable auxiliary spool (68) onto which a flexible and lengthy tightening means (70) is spooled for pull-out and peripheral rotation of the toothed drive wheel (66).

13. The cargo securing device (2, 2') according to claim 12, **characterized in that** the auxiliary spool (68) is adapted for self-rewinding of the tightening means (70) after being fed out.

14. The cargo securing device (2, 2') according to claim 11, **characterized in that** the driving device is comprised of an electric motor.

15. The cargo securing device (2, 2') according to claim 14, **characterized in that** the electric motor is battery-powered.

16. The cargo securing device (2, 2') according to any one of claims 1-15, **characterized in that** the support structure (10, 10') is provided with at least one cleaning device for said attachment means.

17. The cargo securing device (2, 2') according to claim 16, **characterized in that** the cleaning device is placed in at least one of the following positions:
- between the storage spool (6) and the tightening device;
- within the tightening device; and
- between the tightening device and the second and free end portion of the attachment means.

18. The cargo securing device (2, 2') according to claim 16 or 17, **characterized in that** the cleaning device is comprised of at least one of the following types of cleaning devices:
- a brush device;
- a scraping device;
- a dirt-attractive material; and
- a cleansing agent for dirt removal.

19. The cargo securing device (2, 2') according to any one of claims 1-18, **characterized in that** said fastening device for fixing the support structure to an external anchor object, is comprised of at least one further flexible and lengthy attachment means chosen from one of the following types of attachment means:
- a strap (16);
- a rope;
- a line; and
- a chain.

20. The cargo securing device (2, 2') according to any one of claims 1-19, **characterized in that** the cargo securing device (2, 2') is structured as a portable device.
